Europäisches Patentamt

European Patent Office

Office européen des brevets

(11) Veröffentlichungsnummer: **0 497 295 A2**

(12) **EUROPÄISCHE PATENTANMELDUNG**

(21) Anmeldenummer: **92101403.1**

(22) Anmeldetag: **29.01.92**

(51) Int. Cl.5: **B01D 17/028**, B01D 21/00

(30) Priorität: **31.01.91 DE 4102841**

(43) Veröffentlichungstag der Anmeldung:
**05.08.92 Patentblatt 92/32**

(84) Benannte Vertragsstaaten:
**AT BE CH DE FR GB IT LI NL SE**

(71) Anmelder: **WINKELHORST TRENNTECHNIK
GMBH
Kelvinstrasse 8
W-5000 Köln 50(DE)**

(72) Erfinder: **Winkelhorst, Jochen
Zum Landhaus 18
W-5000 Köln 50(DE)**

(74) Vertreter: **Selting, Günther, Dipl.-Ing. et al
Patentanwälte von Kreisler, Selting, Werner
Deichmannhaus am Hauptbahnhof
W-5000 Köln 1(DE)**

(54) **Flüssigkeitsabscheider.**

(57) Ein Flüssigkeitsabscheider zum Trennen der unterschiedlich schweren Fraktionen eines Flüssigkeitsgemisches weist einen Hauptbehälter (10) auf, in dem die Gemischtrennung erfolgt. Zum Abführen von zusätzlich in dem Gemisch enthaltenen Feststoffteilen ist im Bodenbereich des Hauptbehälters (10) mindestens ein Schlammauslaß (48,49) vorgesehen, an den ein auswechselbarer Schlammbehälter (52,53) angeschlossen werden kann. Wenn der Schlammbehälter mit Feststoffen gefüllt ist, kann er nach Schließen eines Absperrorgans (50,51) entfernt und durch einen leeren Schlammbehälter ersetzt werden.

Die Erfindung betrifft einen Flüssigkeitsabscheider zum Trennen der unterschiedlich schweren Fraktionen eines Flüssigkeitsgemisches.

Aus EP 0 350 906 A2 ist ein Flüssigkeitsabscheider bekannt, der als Ringkammerabscheider ausgebildet ist und zur Ölabscheidung eingesetzt werden kann. Im Inneren eines Behälters befinden sich Ringwände, welche konzentrische Ringkammern bilden. Die Ringkammern sind derart angeordnet, daß die in den Behälter eingeleitete Rohflüssigkeit einen schlangenförmigen Strömungsweg durchfließt, wobei die schwere Fraktion in jeder Ringkammer absinkt, während die leichte Fraktion die Möglichkeit hat, aufzusteigen. Die oberen Enden der Ringkammern sind mit einem Kopfraum des Behälters verbunden, in dem sich die leichte Fraktion sammelt. Wenn die Rohflüssigkeit Festkörperbestandteile, z.B. Metallspäne oder Sand, enthält, sammeln sich diese im unteren Bereich des Behälters an. Da sich in diesem Bereich die die Ringkammern verbindenden Umlenkzonen befinden, können diese durch Schlammansammlung verstopfen. Hierdurch wird die Flüssigkeitsströmung durch den Flüssigkeitsabscheider beeinträchtigt. Die Festkörperbestandteile können durch Anlagerung von Öl leicht verklumpen und eine Barriere bilden.

DE 90 02 726 U beschreibt einen Ringkammerabscheider, bei dem zum Zwecke des leichteren Entfernens von Feststoffen der Gehäuseboden abnehmbar ist. Dadurch können zwar die angesammelten Feststoffe entfernt werden, jedoch ist hierzu jeweils das Öffnen des Gehäuses erforderlich. Das vorzeitige Verstopfen der zwischen den Ringkammern vorgesehenen Durchlässe wird nicht verhindert.

Aus US 4 447 322 ist ein Flüssigkeitsabscheider bekannt, der als Wirbel-Abscheider ausgebildet ist. Die Rohflüssigkeit wird diesem Abscheider über eine untere Wirbelkammer zugeführt, die einen konischen Boden aufweist. Von der tiefsten Stelle dieses Bodens führt ein Schlammauslaß über ein beim Betrieb geschlossenes Ventil nach außen. Zum Ablassen des Schlamms muß der Betrieb des Abscheiders unterbrochen werden.

Der Erfindung liegt die Aufgabe zugrunde, einen Flüssigkeitsabscheider zu schaffen, bei dem Feststoffablagerungen entfernt werden können, ohne das Gehäuse zu öffnen und ohne daß der Betrieb unterbrochen werden müßte.

Die Lösung dieser Aufgabe erfolgt erfindungsgemäß mit den im Patentanspruch 1 angegebenen Merkmalen.

Der erfindungsgemäße Ringkammerabscheider weist im Bodenbereich des Hauptbehälters mindestens einen Schlammauslaß auf, der im Betrieb mit einem Schlammbehälter verbunden ist. Die Schlammablagerungen setzen sich somit nicht im Bereich des Hauptbehälters ab sondern sie gelangen unmittelbar in den Schlammbehälter, der unterhalb des Hauptbehälters angeordnet ist. Auf diese Weise können sich im Hauptbehälter selbst keine Schlammablagerungen bilden, die so groß sind, daß sie den Betrieb des Flüssigkeitsabscheiders beeinträchtigen. Die Schlammablagerungen sinken unverzüglich in den Schlammbehälter ab. Der Schlammauslaß befindet sich an der tiefstliegenden Stelle des Bodenbereichs des Hauptbehälters bzw. an der tiefstliegenden Stelle einer Kammer des Hauptbehälters, also dort, wo sich infolge von Sedimentation Schlammansammlungen bilden können.

Wenn der Schlammbehälter mit Schlamm gefüllt ist, kann das Absperrorgan gesperrt werden und der volle Schlammbehälter kann gegen einen leeren Schlammbehälter ausgetauscht oder entleert werden, ohne daß hierzu der Betrieb des Flüssigkeitsabscheiders unterbrochen werden müßte. Der Schlammbehälter ist vorzugsweise über einen leicht zu öffnenden Schnellverschluß an den Schlammauslaß angekuppelt. Das Innere des Schlammbehälters ist flüssigkeitsdicht gegen die Umgebung verschlossen und mit dem Inneren des Hauptbehälters verbunden. Der Schlammbehälter füllt sich beim Betrieb des Flüssigkeitsabscheiders mit Flüssigkeit. In dem Maße, wie Feststoffe in den Schlammbehälter hinein absinken, wird Flüssigkeit aus diesem verdrängt. Um das Maß der Schlammablagerungen beobachten zu können, kann der Schlammbehälter ein durchsichtiges Fenster aufweisen. Damit wird erkannt, wann eine Auswechslung erforderlich ist.

Die Erfindung eignet sich insbesondere für Flüssigkeitsabscheider zum Entfernen von Öl aus einer Kühlemulsion. Derartige Kühlemulsionen werden bei der spanabhebenden Metallverarbeitung zum Kühlen und Schmieren von Werkstücken und Werkzeugen benutzt. Sie können durch Öl, das an den Werkstücken und Werkzeugen haftet, verschmutzt werden. Außerdem können von der Kühlemulsion Späne aufgenommen werden. Ein Flüssigkeitsabscheider dient insbesondere zum Abtrennen des Fremdöls aus der vornehmlich aus Wasser bestehenden Kühlemulsion. Die schwere Fraktion wird hierbei von der Kühlemulsion (vornehmlich Wasser) gebildet, während die abzuscheidende leichte Fraktion aus Öl besteht. Zusätzlich werden Feststoffe, die schwerer sind als die schwere Fraktion, abgelagert und durch den Schlammauslaß abgeführt.

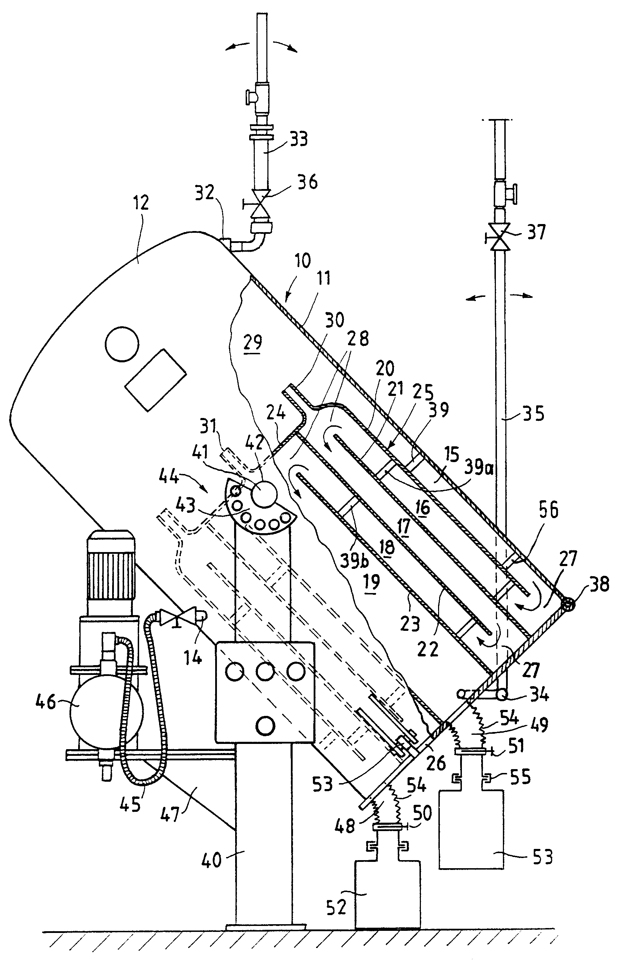

Im folgenden wird unter Bezugnahme auf die einzige Figur der Zeichnung ein Ausführungsbeispiel der Erfindung anhand eines Ringkammerabscheiders näher erläutert.

Im folgenden wird unter Bezugnahme auf die einzige Figur der Zeichnung ein Ausführungsbeispiel der Erfindung näher erläutert.

In der Zeichnung ist ein Ringkammerabscheider in Seitenansicht, teilweise geschnitten, dargestellt.

Der Ringkammerabscheider dient als Ölabscheider zum Entfernen von Öl aus einer Kühlemulsion. Er weist einen zylindrischen langgestreckten Hauptbehälter 10 auf, der aus einem ringförmigen Gehäusekörper 11 besteht, welcher oben durch die Oberwand 12 verschlossen ist, die fest und nicht demontierbar an dem Gehäusekörper 11 angebracht ist, z.B. angeschweißt. An dem Gehäusekörper 11 befindet sich etwa in halber Höhe der Einlaß 14 für die Rohflüssigkeit. Der Einlaß 14 führt tangential in den Hauptbehälter 10 hinein. Im Inneren des Hauptbehälters befinden sich die koaxialen Ringkammern 15,16,17 und 18, die die Zentralkammer 19 umgeben. Die Ringkammern 15-18 und die Zentralkammer 19 sind durch Ringwände 20,21,22,23 voneinander getrennt. Die äußere Ringwand 20, die die anderen Ringwände umschließt, bildet mit der Oberwand 24 eine unten offene Glokke. Diese Glocke bildet zusammen mit den in ihr enthaltenen Ringwänden 21,22,23 eine Einheit 25 als selbständig handhabbare Baugruppe.

Die äußere Ringwand 15 der Einheit 25 und die Ringwand 22 sind fest mit der Oberwand 24 verbunden. Diese Ringwände reichen nicht bis zum Boden 26, der die untere Öffnung des Hauptbehälters 10 verschließt, sondern sie enden im Abstand von diesem Boden und bilden zusammen mit dem Boden ringförmige untere Durchlässe 27. Die beiden anderen Ringwände 21 und 23 stehen dagegen auf dem Boden 26 des Hauptbehälters auf. Sie reichen nicht bis zur Oberwand 24 sondern bilden mit dieser Oberwand ringförmige obere Durchlässe 28. Die Ringwände 20,21,22 und 23, die die koaxialen Ringkammern 15-19 begrenzen, bilden einen schlangenförmigen Strömungsweg, wobei jede zweite Ringwand 20,22 bis zur Oberwand 24 reicht, während die dazwischenliegenden Ringwände 21 und 23 bis zum Boden 26 reichen. Die außerhalb der Einheit 25 liegende äußere Ringkammer 15 wird nach außen hin durch den Behälterkörper 11 begrenzt. Der Hauptbehälter 10 ist flüssigkeitsdicht gegen die Umgebung verschlossen.

Die Rohflüssigkeit strömt vom Einlaß 14 tangential in die äußere Ringkammer 15 ein, in der sie zirkuliert. Ein Teil der leichten Fraktion steigt in der Ringkammer 15 auf und gelangt in den oberhalb der Einheit 25 befindlichen Kopfraum 29 des Hauptbehälters 10. Die übrige Rohflüssigkeit strömt durch den äußeren Durchlaß 27 und steigt in der Ringkammer 16 auf und gelangt über den oberen Durchlaß 28 in die Ringkammer 17. Derjenige Teil der leichten Fraktion, der in den Ringkammern 16 und 17 aufschwimmt, steigt in einen vom Durchlaß 28 abgehenden Rohrstutzen 30 auf. Der übrige Teil der Rohflüssigkeit gelangt durch den inneren unteren Durchlaß 27 in die Ringkammer 18 und von dort durch den inneren oberen Durchlaß 28 in die Zentralkammer 19. Das obere Ende der Zentralkammer 19 ist mit einem weiteren Stutzen 31 versehen, der ebenfalls in den Kopfraum 29 hineinführt. Der Kopfraum 29 ist über eine um eine horizontale Achse schwenkbare Rohrkupplung 32 mit einem Steigrohr 33 verbunden, in das hinein die leichte Fraktion aufsteigt. Das Steigrohr weist in vorbestimmter Höhe einen Überlauf auf, aus dem die Flüssigkeit abgeleitet werden kann. Das untere Ende der Zentralkammer 19 ist ebenfalls über eine um eine horizontale Achse schwenkbare Rohrkupplung 34 mit einem externen Steigrohr 35 verbunden, in das hinein die schwere Fraktion aufsteigt. Auch das Steigrohr 35 ist mit einem Überlauf versehen. Die Höhendifferenz der Überläufe der beiden Steigrohre 33 und 35 gibt an, in welcher Höhe sich im Inneren des Hauptbehälters 10 die Grenzschicht zwischen der schweren und der leichten Fraktion einstellt. Das Steigrohr 33 enthält ein Absperrventil 36 und das Steigrohr 35 ein Absperrventil 37.

Der Behälterboden 26 kann um ein Gelenk 38 herum relativ zum Hauptbehälter 10 aufgeklappt werden, so daß die untere Behälteröffnung geöffnet wird und der Einsatz 25 aus dem Hauptbehälter herausgezogen werden kann. Der Einsatz 25 weist nach außen abstehende Abstandhalter 39 auf, die die äußere Ringkammer 15 überbrücken und den Einsatz im Inneren des Hauptbehälters zentrieren. Die bis zum Boden 26 reichende Ringwand 21 ist über Abstandhalter 39a im Inneren der Ringwand 20 zentriert und die innere Ringwand 23 ist über Abstandhalter 39b im Inneren der Ringwand 22 zentriert. Die Abstandhalter 39a und 39b könne die jeweils benachbarten Ringwände auch starr miteinander verbinden. In diesem Fall tragen die mit der Oberwand 24 verbundenen Ringwände 20 und 22 die nicht mit der Oberwand verbundenen Ringwände 21 und 23. Es ist auch möglich, die Abstandhalter 39,39a und 39b so zu gestalten, daß sie die angrenzenden Ringwände nur in gegenseitigem Abstand halten, jedoch axiale Verschiebungen dieser Ringwände relativ zueinander ermöglichen. Ferner können die unteren Durchlässe 27 durch singuläre Stützfüße überbrückt sein, über die die Ringwände 20 und 22 auf dem Boden 26 ruhen. Die Ringwand 20 ist durch lösbare Verschraubung 56 an der Behälterwand 11 befestigt, um ein Rausrutschen des Einsatzes 25 bei der Öffnung des Bodens 26 zu verhindern.

Der Hauptbehälter 10 ist zwischen zwei Säulen 40 so gelagert, daß er um eine horizontale Achse 41 schwenkbar ist. Entlang dieser Achse sind im Mittelbereich der Behälterhöhe Tragelemente 42 in Form von Achsstummeln am Hauptbehälter angebracht, die in einer Lagervorrichtung 43 der Säulen 40 gelagert sind. Eine Verstellvorrichtung 44 dient dazu, den jeweiligen Neigungswinkel des Hauptbehälters 10 einzustellen und zu fixieren. Die Verstellvorrichtung erlaubt es, die Behälterneigung beispielsweise in Winkelschritten von 15° zu verändern, wobei der Hauptbehälter zwischen einer Position mit vertikaler Behälterachse und einer Position mit horizontaler Behälterachse verstellt werden kann. Entsprechend der Behälterneigung werden die Steigrohre 33 und 35 durch Verschwenken um die Rohrkupplungen 32 und 34 so eingestellt, daß sie jeweils eine vertikale Ausrichtung haben.

Der Einlaß 14 des Behälters 10 ist über einen flexiblen Schlauch 45 mit einer Pumpe 46 verbunden, die auf einer Konsole 47 montiert ist, welche an einer der Säulen 40 angebracht ist. Die Pumpe 46 fördert die Rohflüssigkeit mit Druck in den Hauptbehälter 10.

Im Boden 26 sind Schlammauslässe 48 und 49 vorgesehen, die jeweils über ein Absperrorgan 50 bzw. 51 mit einem Schlammbehälter 52 bzw. 53 verbunden sind. Hinter jedem Schlammauslaß 48,49 ist jeweils ein flexibles Rohrstück 54 oder Gelenk vorgesehen, das es ermöglicht, den Schlammbehälter in jeder beliebigen Schrägstellung des Hauptbehälters 10 in vertikaler Ausrichtung zu halten. Die Schlammbehälter 52,53 sind an dem Hauptbehälter 10 bzw. an dem Boden 26 aufgehängt und jeder Schlammbehälter ist mit einer Schnellkupplung 55 leicht lösbar mit der vom Hauptbehälter kommenden Rohrleitung verbunden.

Der Schlammauslaß 48 ist im Bereich des äußeren ringförmigen Durchlasses 27 an einer Stelle angeordnet, die bei Schrägstellung des Hauptbehälters 10 unten liegt und somit den tiefsten Teil des Innenraums des Hauptbehälters bildet. Der Schlammauslaß 49 ist im Inneren der Zentralkammer 19 an einer Stelle angeordnet, die bei Schrägstellung des Hauptbehälters den tiefsten Punkt der Zentralkammer bildet. Am Schlammauslaß 48 sammeln sich Feststoffe, die in den Ringkammer 15 und 16 absinken. Am Schlammauslaß 49 sammeln sich Feststoffe, die in der Zentralkammer 19 absinken. Die Erfahrung hat gezeigt, daß sich in den Ringkammern 17 und 18 kaum Feststoffe ablagern. Erforderlichenfalls kann an dem inneren unteren Durchlaß 27 ebenfalls ein Auslaß vorgesehen werden.

Die Absperrorgane 50 und 51 sind normalerweise geöffnet. Der Schlamm, der sich auf dem Boden 26 absetzt, gelangt durch Schwerkrafteinfluß über die Schlammauslässe 48 und 49 in die Schlammbehälter 52 und 53. Wenn einer der Schlammbehälter mit Feststoffen voll ist, kann das betreffende Absperrorgan 50 bzw. 51 geschlossen werden. Dann kann der betreffende Schlammbehälter durch Lösen der Schnellkupplung 55 entfernt und durch einen leeren Schlammbehälter ersetzt werden.

Sollte es vorkommen, daß sich in dem Hauptbehälter 10 Schlamm festsetzt, der eventuell die Schlammauslässe verstopfen könnte, dann können zum Zwecke des Spülens die Ventile 36 und 37 in den Steigleitungen abgesperrt werden und Flüssigkeit kann mit Druck in den Einlaß 14 eingeführt werden. Anstelle der Schlammbehälter 52 und 53 wird eine zur Atmosphäre hin offene Auffangwanne unter die Schlammauslässe gestellt, in die hinein bei geöffneten Absperrorganen 50,51 der Schlamm mit Druck ausgespült wird.

## Patentansprüche

1. Flüssigkeitsabscheider zum Trennen der unterschiedlich schweren Fraktionen eines Flüssigkeitsgemisches, mit einem Hauptbehälter (10), der einen Einlaß (14) für das Flüssigkeitsgemisch und in unterschiedlichen Höhen angeordnete Auslässe für die einzelnen Fraktionen aufweist, und mindestens einem im Bodenbereich des Hauptbehälters vorgesehenen, mit einem Absperrorgan (50,51) versehenen Schlammauslaß (48,49)
**dadurch gekennzeichnet,**
daß das Absperrorgan (50,51) den Schlammauslaß (48,49) mit einem abnehmbaren Schlammbehälter (52,53) verbindet, dessen Inneres gegen die Atmosphäre flüssigkeitsdicht abgeschlossen ist und der abnehmbar oder, z.B. durch Öffnen seines Bodens, zu entleeren ist.

2. Flüssigkeitsabscheider nach Anspruch 1, dadurch gekennzeichnet, daß der Schlammbehälter (52,53) an dem Hauptbehälter (10) aufgehängt ist.

3. Flüssigkeitsabscheider nach Anspruch 1 oder 2, dadurch gekennzeichnet, daß der Hauptbehälter (10) in einer in Bezug auf die Vertikale schrägstehenden Position betreibbar ist und daß der Schlammauslaß (48,49) an einer Stelle vorgesehen ist, die bei schräger Anordnung des Hauptbehälters die tiefste Stelle einer Kammer (15,16;19) des Hauptbehälters bildet.

4. Flüssigkeitsabscheider nach einem der Ansprüche 1 bis 3, dadurch gekennzeichnet, daß er als Ringkammerabscheider ausgebildet ist, mit in dem Hauptbehälter (10) angeordneten Ringwänden (20,21, 22,23), die eine Gruppe von ineinandergeschachtelten, einen schlangenförmigen Strömungsweg bildenden Ringkammern (15,16,17, 18,19) begrenzen, wobei die Ringwände abwechselnd obere Durchlässe (28) und untere Durchlässe (27) bilden.

5. Flüssigkeitsabscheider nach einem der Ansprüche 1, 2 oder 4, dadurch gekennzeichnet, daß der Hauptbehälter mit senkrechter Achse aufrechtstehend angeordnet ist und daß sein Boden mindestens eine trichterförmige Mulde aufweist, mit der der Schlammauslaß verbunden ist.